# EUROPÄISCHE PATENTSCHRIFT

(11) **EP 1 281 586 B1**
(45) Veröffentlichungstag und Bekanntmachung des Hinweises auf die Patenterteilung: **14.06.2006**
(21) Anmeldenummer: 02016261.6
(22) Anmeldetag: 22.07.2002
(51) Int. Cl.: B60R 21/20

(54) **Lenkrad mit beweglichem Gassackmodul**
Steering wheel with movable airbag module
Volant avec module de sac gonflable déplaçable

(30) Priorität: 01.08.2001 DE 20112719 U
(43) Veröffentlichungstag der Anmeldung: 05.02.2003
(73) Patentinhaber: TRW Automotive Safety Systems GmbH, 63743 Aschaffenburg (DE)
(72) Erfinder: Hirzmann, Guido, 63877 Sailauf (DE)
(74) Vertreter: Kitzhofer, Thomas

(56) Entgegenhaltungen:
- GB-A- 2 290 267
- GB-A- 2 336 135

## Beschreibung

Die Erfindung betrifft ein Lenkrad mit einem Lenkradkörper, einem an diesem beweglich gelagerten Gassackmodul und mit wenigstens einer Führungseinrichtung, die sowohl mit dem Gassackmodul als auch mit dem Lenkradkörper verbunden ist, wobei das Gassackmodul zur Hupenbetätigung über einen Verlagerungsweg relativ zum Lenkradkörper bewegbar ist.

Aus der GB 2 290 267 A ist ein Lenkrad mit einem beweglich gelagerten Gassackmodul nach dem Oberbegriffs des Anspruchs 1 bekannt.

Lenkräder mit Gassackmodulen, die nach dem Typ des "floating horns" ausgebildet sind, in denen das gesamte Gassackmodul zum Schließen eines Hupkontakts bewegt wird, müssen hohe Anforderungen an Ästhetik und Funktionalität erfüllen. Um den Spalt zwischen Gassackmodul und Lenkradkörper möglichst klein halten zu können, ist es wünschenswert, daß sich das Gassackmodul im Lenkradkörper möglichst ohne seitliches Spiel bewegt.

Dies wird erfindungsgemäß bei einem gattungsgemäßen Lenkrad dadurch erreicht, daß die Führungseinrichtung wenigstens zwei Träger aufweist, die quer zur Richtung des Verlagerungswegs und parallel zueinander sowie in Richtung des Verlagerungswegs versetzt zueinander angeordnet sind, wobei die Führungseinrichtung ein erstes, mit dem Lenkradkörper verbundenes Ende und ein zweites, mit dem Gassackmodul verbundenes Ende aufweist. Die Konstruktion der Führungseinrichtung erlaubt es, ein Bauteil auf einer Kreisbahn zu bewegen, wobei die Ausrichtung des Bauteils unverändert bleibt. Der vom Gassackmodul zurückgelegte Verlagerungsweg über die zur Hupenbetätigung notwendige Wegstrecke kann dabei in guter Näherung als linear angesehen werden kann. Mit der Befestigung an zwei Trägern läßt sich zudem ein Verkippen des Moduls bei der Hupenbetätigung vermeiden. Durch die Verwendung einer derartigen Führungseinrichtung kann die Bewegung des Gassackmoduls im Lenkradkörper bei geringen Herstellungs- und Materialkosten nahezu spielfrei gestaltet werden.

In einer bevorzugten Ausführungsform ist die Führungseinrichtung sowohl mit dem Lenkradkörper als auch mit dem Gassackmodul starr verbunden und so elastisch ausgeführt, daß sie zur Hupenbetätigung elastisch gebogen wird. In dieser Ausführungsform kann vollständig auf Gelenke verzichtet werden, was das Spiel noch weiter verringert sowie die Herstellungskosten senkt.

Die Träger sind bevorzugt aus Blechstreifen gebildet. Um die Elastizität der Blechstreifen optimal ausnutzen zu können, sind diese vorteilhaft so angeordnet, daß ihre breiten Seiten aufeinander zu und in Richtung des Verlagerungswegs des Gassackmoduls weisen.

In einer Weiterbildung der Erfindung weisen die Träger jeweils zwei Schenkel auf, die in etwa im rechten Winkel zueinander verlaufen. Diese rechtwinklig gebogenen Träger können z.B. das Gassackmodul außen umfassen und ermöglichen so eine optimale Anpassung an den geringen Platz im Lenkradkörper.

Bevorzugt ist die Führungseinrichtung dadurch gebildet, daß die Träger durch teilweises Umspritzen mit Kunststoff verbunden werden. Dies geschieht vorteilhaft dadurch, daß die parallelen Träger an ihren Längsenden miteinander über jeweils eine Brücke verbunden und auf Abstand gehalten sind. Besonders günstig ist es, wenn die Brücken Kunststoffspritzteile sind, in die die Enden der Träger eingebettet sind. So erhält man auf einfache und billige Weise eine spielfreie Führung für das Gassackmodul.

Die gerade beschriebene Ausführungsform eignet sich gut dazu, die Führungseinrichtung an einer ersten Brücke am Lenkradkörper und/oder an einer zweiten Brücke am Gassackmodul zu befestigen. Die Brücken können so ausgebildet sein, daß sie Befestigungsmöglichkeiten aufweisen.

In einer bevorzugten Ausführungsform der Erfindung ist zusätzlich zur Führungseinrichtung ein Rückstellelement vorgesehen, das nach einer Verlagerung des Gassackmoduls dieses in seine Ausgangsstellung zurückbewegt. Alternativ oder zusätzlich kann vorgesehen sein, daß durch eine Verlagerung des Gassackmoduls eine Rückstellkraft in der Führungseinrichtung erzeugt wird, die dafür sorgt, daß nach einer Verlagerung des Gassackmoduls diese in seiner Ausgangsstellung zurückbewegt wird. Die Führungseinrichtung erfüllt dann gleichzeitig die Funktion eines Rückstellelements.

Wenn die Führungseinrichtung in einer unbetätigten Ausgangsstellung des Gassackmoduls eine Vorspannung auf das Gassackmodul ausübt, läßt sich eine ungewollte Bewegung oder z.B. ein Klappern des Gassackmuduls im Lenkradkörper auf einfache Weise vermeiden.

Eine andere Ausführungsform der Erfindung sieht vor, daß die beiden Träger eine Parallelogrammführung für das Gassackmodul bilden. In diesem Fall sind die Träger jeweils schwenkbar am Gassackmodul und am Lenkradkörper befestigt.

Im folgenden wird die Erfindung anhand der Beschreibung mehrerer Ausführungsbeispiele in bezug auf die beigefügten Zeichnungen näher beschrieben. In den Zeichnungen zeigen:
- Figur 1 eine schematische Darstellung eines erfindungsgemäßen Lenkrads gemäß einer ersten Ausführungsform;
- Figur 2 eine schematische Darstellung einer zweiten Ausführungsform eines erfindungsgemäßen Lenkrads;
- Figur 3 eine Führungseinrichtung zur Verwendung in einem erfindungsgemäßen Lenkrad;
- Figur 4 eine Baugruppe aus einem Gassackmodul und einem Führungselement zur Verwendung in einem erfindungsgemäßen Lenkrad;
- Figur 5 ein erfindungsgemäßes Lenkrad in einer weiteren Ausführungsform; und
- Figur 6 ein Führungselement zur Verwendung in einem erfindungsgemäßen Lenkrad gemäß einer vierten Ausführungsform.

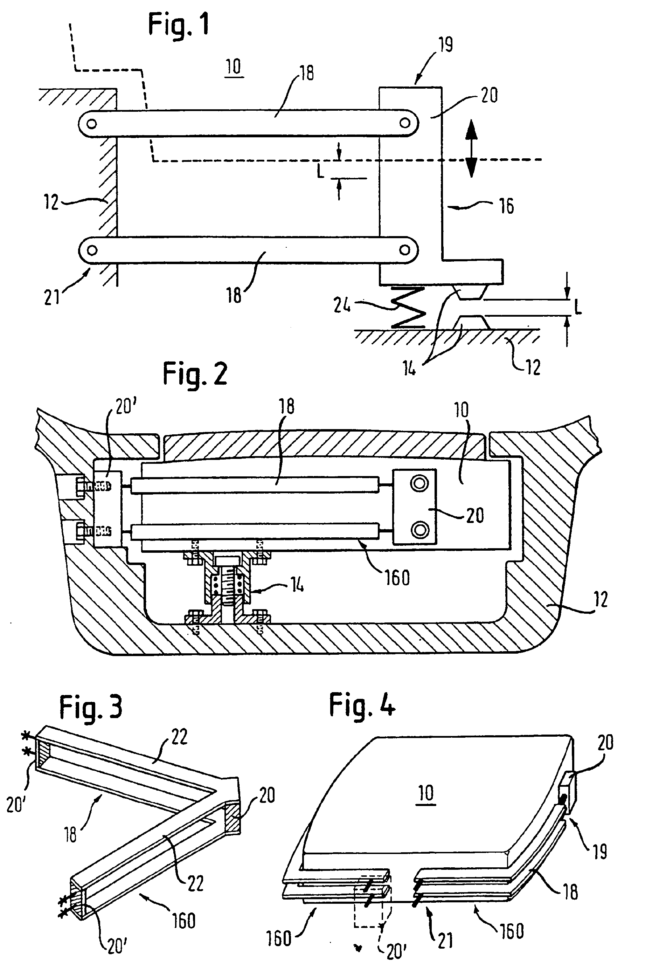

In Figur 1 ist eine erste Ausführungsform der Erfindung schematisch dargestellt. Ein Gassackmodul 10 ist in einem Lenkradkörper 12, der Teil eines Lenkrads ist und bevorzugt dessen Nabenregion darstellt, beweglich gelagert. Der Verlagerungsweg L des Gassackmoduls 10 entspricht dem Abstand zwischen zwei Hupkontakten 14. Die Richtung des Verlagerungswegs L ist durch einen Pfeil angedeutet. Die Verlagerungsrichtung ist so ausgelegt, daß das Gassackmodul 10 vom Fahrer eines Fahrzeuges in den Lenkradkörper 12 hineingedrückt werden kann, um die Hupe zu betätigen.

Eine Führungseinrichtung, die in diesem Ausführungsbeispiel als Parallelogrammführung 16 ausgebildet ist und die zwei Träger 18 aufweist, verbindet den Lenkradkörper 12 mit dem Gassackmodul 10. Die Träger 18 sind senkrecht zum Verlagerungsweg, parallel zueinander und in Richtung des Verlagerungswegs versetzt zueinander angeordnet. An einem ersten Ende 19 der Parallelogrammführung 16 sind die Träger 18 drehbar gelagert mit einer Brücke 20 verbunden, die wiederum starr, d.h. nicht drehbar oder verschieblich, am Gassackmodul 10 befestigt oder Teil derselben ist. An einem zweiten Ende 21 der Parallelogrammführung 16 sind die anderen Enden der Träger 18 drehbar am Lenkradkörper 12 gelagert.

Über den im Bereich von Millimetern liegenden Verlagerungsweg L führt das Gassackmodul 10 bei einer Verlagerung aufgrund der Parallelogrammführung 16 eine in guter Näherung lineare Bewegung aus. Die Ausbildung der Führungseinrichtung erlaubt eine nahezu spielfreie Führung des Gassackmoduls 10.

Im hier gezeigten Beispiel ist der Hupkontakt 14 an der Brücke 20 angeordnet. Die Anordnung des Hupkontaktes kann jedoch beliebig den jeweiligen Erfordernissen angepaßt sein.

Um das Gassackmodul 10 in seine Ausgangslage, die in Figur 1 dargestellt ist, zurückzubewegen, nachdem es zur Betätigung der Hupe in Richtung des Verlagerungswegs verlagert wurde, ist ein Rückstellelement, in diesem Fall eine Rückstellfeder 24, zwischen der Brücke 20 und dem Lenkradkörper 12 angeordnet. Bevorzugt erzeugt diese Rückstellfeder 24 eine Vorspannung, die das Gassackmodul 10 in seiner unbetätigten Ausgangsstellung hält, um ein Klappern oder ein unbeabsichtigtes Betätigen der Hupe zu verhindern.

Die in den Figuren 2 bis 6 gezeigten Ausführungsformen der Erfindung unterscheiden sich von der ersten Ausführungsform prinzipiell dadurch, daß keine drehbare Lagerung der Enden der Träger 18 vorgesehen ist. Die Enden der hier vorgestellten Führungseinrichtung 160 und damit die Enden der Träger 18 sind einerseits starr mit dem Lenkradkörper 12 und andererseits starr mit dem Gassackmodul 10 verbunden. Eine Verlagerung des Gassackmoduls 10 wird durch die Eigenelastizität der Träger 18 ermöglicht, die bei einer Betätigung der Hupe elastisch durchgebogen werden, um dem Gassackmodul 10 zu ermöglichen, den Verlagerungsweg L zurückzulegen. Die Träger 18 sind bevorzugt Blechstreifen, die so in der Führungseinrichtung 160 angeordnet sind, daß ihre breiten Seiten aufeinander zu und in Richtung des Verlagerungswegs L gerichtet sind, wobei die Eigenelastizität des Materials ein Durchbiegen der Träger 18 gestattet.

Bei der in den Figuren 2 bis 4 gezeigten Ausführungsformen sind die Träger 18 der Führungseinrichtung 160 jeweils gebogen, so daß jeder Träger 18 zwei Schenkel 22 aufweist, die in etwa einen rechten Winkel einschließen. Die Träger 18 liegen parallel zueinander und sind durch an ihren Enden angeordnete Brücken 20, 20' miteinander verbunden. Die Brücken halten gleichzeitig die Träger 18 auf Abstand. Am Scheitelpunkt des Winkels können die beiden Träger 18 durch eine weitere Brücke 20 miteinander verbunden sein. Die Brücken 20, 20' stellen außerdem Befestigungsvorrichtungen zur Verfügung, um die Führungseinrichtung 160 mit dem Lenkradkörper 12 (über Brücken 20') bzw dem Gassackmodul 10 (über Brücke 20) zu verbinden. Dies ist schematisch in Figur 3 gezeigt.

Auch in diesem Fall sorgt die Führung durch zwei parallele, voneinander beabstandete Träger für eine quasilineare Bewegung des Gassackmoduls ohne seitliches Spiel.

Die Führungseinrichtung 160 wird bevorzugt so gefertigt, indem die Blechstreifen der Träger 18 durch Umformen aus Stahlblech hergestellt und in einem Spritzgußverfahren mit den Brücken 20, 20' umspritzt werden.

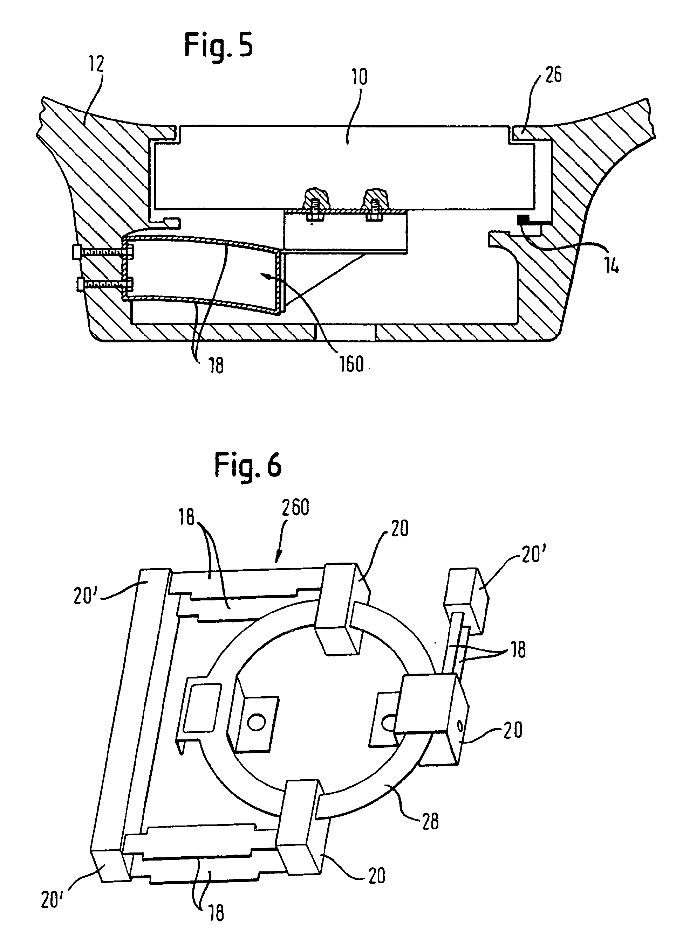

Das Gassackmodul 10 wird von zwei spiegelbildlich zueinander angeordneten Führungseinrichtungen 160 umfaßt, wie in Figur 4 dargestellt ist.

Die Hupkontakte 14 sind in diesem Beispiel zwischen der Unterseite des Gassackmoduls 10 und dem Lenkradkörper 12 ausgebildet.

Bei dem in Figur 5 gezeigten Ausfuhrungsbeispiel sind die nach dem Beispiel der Figur 3 ausgebildete Führungseinrichtungen 160 so angeordnet, daß das Gassackmodul 10 auf dem oberen der Träger 18 aufliegt.

Die Führungseinrichtung 160 ist in der in Figur 5 gezeigten Ausgangsstellung des Gassackmoduls 10 leicht vorgespannt, so daß das Gassackmodul 10 gegen Vorsprünge 26 im Lenkradkörper 12 gehalten ist. Zur Betätigung des Hupkontakts 14 wird das Gassackmodul 10 gegen den Widerstand der Führungseinrichtung 160 heruntergedrückt. Wird das Gassackmodul 10 wieder losgelassen, sorgt die Vorspannung der Führungseinrichtung 160, die durch die elastische Verbiegung der Träger 18 erzeugt wird, dafür, daß das Gassackmodul 10 in seine Ausgangsstellung zurückbewegt wird. In diesem Fall dient die Führungseinrichtung 160 gleichzeitig als Rückstellelement.

Die in Figur 6 gezeigte Führungseinrichtung 260 weist drei Trägerpaare 18 auf. Die Enden der Träger 18 sind, wie oben dargestellt, mit Brücken 20, 20' verbunden, in denen sie auch beabstandet gehalten werden. Drei der Brücken 20 sind mit einer ringförmigen Halterung 28 für ein Gassackmodul starr verbunden. Die restlichen Brücken 20', die die nicht mit der Halterung 28 verbundenen Enden der Träger 18 aufnehmen, sind starr mit einem nicht gezeigten Lenkradkörper 12 verbunden. Um die Fertigung zu vereinfachen, kann eine der Brücken 20 so ausgerührt sein, daß sie die Enden zweier Trägerpaare miteinander verbindet.

Zwei der Trägerpaare 18 greifen an diametral gegenüberliegenden Stellen der ringförmigen Halterung 28 an, während das dritte Trägerpaar über seine Brücke 20 um 90° dazu versetzt mit der Halterung 28 verbunden ist. Das seitliche Spiel des Gassackmoduls ist bei dieser Ausführung noch weiter verringert.

## Patentansprüche

1. Lenkrad mit einem Lenkradkörper (12), einem an diesem beweglich gelagerten Gassackmodul (10) und mit wenigstens einer Führungseinrichtung (16, 160; 260), die sowohl mit dem Gassackmodul (10) als auch mit dem Lenkradkörper (12) verbunden ist, wobei das Gassackmodul (10) zur Hupenbetätigung über einen Verlagerungsweg (L) relativ zum Lenkradkörper (12) bewegbar ist, **dadurch gekennzeichnet, daß** die Führungseinrichtung (16; 160; 260) wenigstens zwei Träger (18) aufweist, die quer zur Richtung des Verlagerungswegs (L) und parallel zueinander sowie in Richtung des Verlagerungswegs (L) versetzt zueinander angeordnet sind, wobei die Führungseinrichtung (16; 160; 260) ein erstes, mit dem Gassackmodul (10) verbundenes Ende (19) und ein zweites, mit dem Lenkradkörper (12) verbundenes Ende (21) aufweist.

2. Lenkrad nach Anspruch 1, **dadurch gekennzeichnet, daß** die Führungseinrichtung (160; 260) sowohl mit dem Lenkradkörper (12) als auch mit dem Gassackmodul (10) starr verbunden und so elastisch ausgeführt ist, daß sie zur Hupenbetätigung elastisch gebogen wird.

3. Lenkrad nach einem der vorhergehenden Ansprüche, **dadurch gekennzeichnet, daß** die Träger (18) aus Blechstreifen gebildet sind.

4. Lenkrad nach Anspruch 3, **dadurch gekennzeichnet, daß** die Blechstreifen breite Seiten aufweisen und so in der Führungseinrichtung (160; 260) angeordnet sind, daß ihre breiten Seiten aufeinander zu und in Richtung des Verlagerungswegs (L) weisen.

5. Lenkrad nach einem der vorhergehenden Ansprüche, **dadurch gekennzeichnet, daß** die Träger (18) jeweils zwei Schenkel (22) aufweisen, die in etwa im rechten Winkel zueinander verlaufen.

6. Lenkrad nach einem der vorhergehenden Ansprüche, **dadurch gekennzeichnet, daß** die Führungseinrichtung (160; 260) **dadurch** gebildet ist, daß die Träger (18) durch teilweises Umspritzen mit Kunststoff miteinander verbunden werden.

7. Lenkrad nach einem der vorhergehenden Ansprüche, **dadurch gekennzeichnet, daß** die parallelen Träger (18) an ihren Längsenden miteinander über jeweils eine Brücke (20, 20') verbunden und auf Abstand gehalten sind.

8. Lenkrad nach Anspruch 7, **dadurch gekennzeichnet, daß** die Brücken (20, 20') Kunststoffspritzteile sind, in die die Enden der Träger (18) eingebettet sind.

9. Lenkrad nach einem der Ansprüche 7 oder 8, **dadurch gekennzeichnet, daß** die Führungseinrichtung (160; 260) an einer ersten Brücke (20) am Gassackmodul (10) und/oder an einer zweiten Brücke (20') am Lenkradkörper (12) befestigt ist.

10. Lenkrad nach einem der vorhergehenden Ansprüche, **dadurch gekennzeichnet, daß** zusätzlich zur Führungseinrichtung (16; 160; 260) ein Rückstellelement (24) vorgesehen ist, das nach einer Verlagerung des Gassackmoduls (10) dieses in seine Ausgangsstellung zurückbewegt.

11. Lenkrad nach einem der vorhergehenden Ansprüche, **dadurch gekennzeichnet, daß** durch eine Verlagerung des Gassackmoduls (10) eine Rückstellkraft in der Führungseinrichtung (160; 260) erzeugt wird, die dafür sorgt, daß nach einer Verlagerung des Gassackmoduls (10) dieses in seine Ausgangsstellung zurückbewegt wird.

12. Lenkrad nach einem der vorhergehenden Ansprüche, **dadurch gekennzeichnet, daß** die Führungseinrichtung (160) in einer unbetätigten Ausgangsstellung des Gassackmoduls (10) eine Vorspannung auf das Gassackmodul (10) ausübt.

13. Lenkrad nach Anspruch 1, **dadurch gekennzeichnet, daß** die beiden Träger (18) eine Parallelogrammführung (16) für das Gassackmodul (10) bilden.

## Claims

1. A steering wheel comprising a steering wheel body (12), an airbag module (10) movably mounted thereon, and at least one guide means (16; 160; 260) that is connected to the airbag module (10) as well as to the steering wheel body (12), the airbag module (10) being adapted to be moved over a displacement path (L) relative to the steering wheel body (12) for actuating the horn, **characterized in that** the guide means (16; 160; 260) has at least two carriers (18) that are arranged transversely to the direction of the displacement path (L) and parallel to each other as well as offset in relation to each other in the direction of the displacement path (L), the guide means (16; 160; 260) having a first end (19) that is connected to the airbag module (10) and a second end (21) that is connected to the steering wheel body (12).

2. The steering wheel according to Claim 1, **characterized in that** the guide means (160; 260) is rigidly connected to the steering wheel body (12) as well as to the airbag module (10) and is designed to be so elastic that it is elastically bent for actuating the horn.

3. The steering wheel according to either of the preceding claims, **characterized in that** the carriers (18) are formed of sheet metal strips.

4. The steering wheel according to Claim 3, **characterized in that** the sheet metal strips have broadsides and are arranged in the guide means (160; 260) in such a way that their broadsides face each other and face in the direction of the displacement path (L).

5. The steering wheel according to any of the preceding claims, **characterized in that** the carriers (18) each have two legs (22) that extend approximately at right angles to each other.

6. The steering wheel according to any of the preceding claims, **characterized in that** the guide means (160; 260) is formed **in that** the carriers (18) are connected with each other by partial encasing by means of injection molding with plastic.

7. The steering wheel according to any of the preceding claims, **characterized in that** the parallel carriers (18) are connected to each other at their longitudinal ends by means of a respective bridge (20, 20') and are held at a distance from each other.

8. The steering wheel according to Claim 7, **characterized in that** the bridges (20, 20') are injection-molded plastic parts in which the ends of the carriers (18) are embedded.

9. The steering wheel according to either of Claims 7 or 8, **characterized in that** the guide means (160; 260) is attached to a first bridge (20) on the airbag module (10) and/or to a second bridge (20') on the steering wheel body (12).

10. The steering wheel according to any of the preceding claims, **characterized in that**, in addition to the guide means (16; 160; 260), a return element (24) is provided that moves the airbag module (10) back into its starting position after it has been displaced.

11. The steering wheel according to any of the preceding claims, **characterized in that**, through a displacement of the airbag module (10), a return force is generated in the guide means (160; 260) that ensures that the airbag module (10) is moved back into its starting position after it has been displaced.

12. The steering wheel according to any of the preceding claims, **characterized in that** in a non-actuated starting position of the airbag module (10), the guide means (160) exerts a prestress on the airbag module (10).

13. The steering wheel according to Claim 1, **characterized in that** the two carriers (18) form a parallelogram guide (16) for the airbag module (10).

## Revendications

1. Volant de direction comportant un corps de volant de direction (12), un module de coussin à gaz (10) monté mobile dans celui-ci et comportant au moins un moyen de guidage (16 ; 160 ; 260) qui est relié tant au module de coussin à gaz (10) qu'au corps de volant de direction (12), le module de coussin à gaz (10) étant déplaçable sur une course de déplacement (L) par rapport au corps de volant de direction (12) pour actionner le klaxon, **caractérisé en ce que** le moyen de guidage (16 ; 160 ; 260) présente au moins deux supports (18) qui sont agencés transversalement à la direction de la course de déplacement (L) et parallèlement l'un à l'autre ainsi qu'en décalage l'un par rapport à l'autre en direction de la course de déplacement (L), le moyen de guidage (16 ; 160 ; 260) présentant une première extrémité (19) reliée au module de coussin à gaz (10) et une deuxième extrémité (21) reliée au corps de volant de direction (12).

2. Volant de direction selon la revendication 1, **caractérisé en ce que** le moyen de guidage (160 ; 260) est relié de manière rigide tant au corps de volant de direction (12) qu'au module de coussin à gaz (10) et réalisé de manière si élastique qu'il est plié élastique pour actionner le klaxon.

3. Volant de direction selon l'une des revendications précédentes, **caractérisé en ce que** les supports (18) sont réalisés à partir de bandes de tôle.

4. Volant de direction selon la revendication 3, **caractérisé en ce que** les bandes de tôle présentent des côtés larges et sont agencées dans le moyen de guidage (160 ; 260) de telle sorte que leurs côtés larges sont tournés l'un vers l'autre et en direction de la course de déplacement (L).

5. Volant de direction selon l'une des revendications précédentes, **caractérisé en ce que** les supports (18) présentent chacun deux branches (22) qui s'étendent approximativement en angle droit l'une par rapport à l'autre.

6. Volant de direction selon l'une des revendications précédentes, **caractérisé en ce que** le moyen de guidage (160 ; 260) est formé par le fait que les supports (18) sont reliés l'un à l'autre par moulage par injection partiel avec de la matière plastique.

7. Volant de direction selon l'une des revendications précédentes, **caractérisé en ce que** les supports (18) parallèles sont reliés l'un à l'autre à leurs extrémités longitudinales par un pont (20, 20') respectif et sont maintenus à distance.

8. Volant de direction selon la revendication 7, **caractérisé en ce que** les ponts (20, 20') sont des pièces de matière plastique moulées par injection dans lesquelles sont encastrées les extrémités des supports (18).

9. Volant de direction selon l'une des revendications 7 ou 8, **caractérisé en ce que** le moyen de guidage (160 ; 2650) est fixé sur un premier pont (20) sur le module de coussin à gaz (10) et/ou sur un deuxième pont (20') sur le corps de volant de direction (12).

10. Volant de direction selon l'une des revendications précédentes, **caractérisé en ce que** additionnellement au moyen de guidage (16 ; 160 ; 260), il est prévu un élément de rappel (24) qui après un déplacement du module de coussin à gaz (10), ramène celui-ci dans sa position initiale.

11. Volant de direction selon l'une des revendications précédentes, **caractérisé en ce que** grâce à un déplacement du module de coussin à gaz (10), il est produit une force de rappel dans le moyen de guidage (160 ; 260) qui assure qu'après un déplacement du module de coussin à gaz (10), celui-ci est ramené dans sa position initiale.

12. Volant de direction selon l'une des revendications précédentes, **caractérisé en ce que** le moyen de guidage (160) exerce une précontrainte sur le module de coussin à gaz (10) dans une position initiale inactivée du module de coussin à gaz (10).

13. Volant de direction selon la revendication 1, **caractérisé en ce que** les deux supports (18) forment un guidage par parallélogramme (16) pour le module de coussin à gaz (10).
